# EUROPEAN PATENT APPLICATION

(11) **EP 3 904 183 A1**
(43) Date of publication of application: **03.11.2021**
(21) Application number: 19902290.6
(22) Date of filing: 11.12.2019
(51) Int. Cl.: B62D 3/12, B21H 3/04, B21K 1/76, B23K 20/12, F16H 19/04, F16H 25/22

(54) **LINEAR DRIVE SHAFT FOR ELECTRIC POWER STEERING DEVICE, ELECTRIC POWER STEERING DEVICE, AND METHOD FOR MANUFACTURING SAME**

(30) Priority: 27.12.2018 JP 2018244750
(71) Applicant: NSK Ltd., Tokyo 141-8560 (JP)
(72) Inventor: YASUDA, Kaname, Maebashi-shi, Gunma 371-0845 (JP); UNNO, Kentaro, Maebashi-shi, Gunma 371-0845 (JP); MAYUZUMI, Takanori, Maebashi-shi, Gunma 371-0845 (JP); TERAKADO, Hisashi, Maebashi-shi, Gunma 371-0845 (JP)
(74) Representative: Grünecker Patent- und Rechtsanwälte PartG mbB
(86) International application number: PCT/JP2019/048491
(87) International publication number: WO 2020/137551

(57) **Abstract**

With respect to a linear motion shaft in which a rack shaft part and a ball screw shaft part are joined to each other by friction welding, coaxiality of a portion having a rack shaft part and a portion having a ball screw shaft part is improved. In a state where a gripped portion 56 formed on the screw shaft part 29 is gripped by a first gripping tool 57 for centering, and a rack shaft part 28 is gripped by a second gripping tool 58 for centering, end portions in the axial direction of the rack shaft part 28 and the screw shaft part 29 are abutted to each other while the screw shaft part 29 and the rack shaft part 28 are relatively rotated by rotating the first gripping tool 57, so that the rack shaft part 28 and the screw shaft part 29 are joined to each other by friction welding.

## Description

### Technical Field

The present invention relates to a linear motion shaft of an electric power steering device for a vehicle such as an automobile or the like, an electric power steering device including the linear motion shaft, and methods for manufacturing them.

### Background Art

In a steering device for a vehicle such as an automobile or the like, the rotation of a steering wheel is transmitted to an input shaft of a steering gear unit, and the rotation of the input shaft is converted to linear motion in the axial direction of a linear motion shaft (rack shaft) that is arranged in the width direction of a vehicle body. Due to this, tie rods, which are supported by end portions on both sides in the axial direction of the linear motion shaft, are pushed and pulled, so that steering angles are provided to steered wheels.

Widely embodied are steering devices composed of an electric power steering device including an electric power assist device for reducing a force required for a driver to operate the steering wheel. The electric power steering device is configured to apply an auxiliary power of an electric motor to a member that rotates or linearly moves according to the rotation of the steering wheel. Three types are known as the electric power steering device, a column assist type for applying an auxiliary power to a steering shaft, a pinion assist type for applying an auxiliary power to the input shaft (pinion shaft) of the steering gear unit, and a rack assist type for applying an auxiliary power to the linear motion shaft of the steering gear unit. Among them, the rack assist type electric power steering device has an advantage of easily increasing the auxiliary power.

In the rack assist type electric power steering device, the rotation torque of the electric motor is converted to linear motion in the axial direction of the linear motion shaft by the ball screw mechanism, and then applied to the linear motion shaft. This linear motion shaft includes a rack toothed portion in a portion on one side in the axial direction, which is to mesh with a pinion toothed portion of the input shaft which rotates according to the rotation of the steering wheel, and includes a ball screw portion in a portion on the other side in the axial direction, on which a female thread groove having a substantially semicircular arc cross-sectional shape is formed spirally. Manufacturing this linear motion shaft from one material is disadvantageous from an aspect of cost reduction because in a case where either the rack toothed portion or the ball screw portion is insufficient in terms of shape accuracy and dimensional accuracy, the linear motion shaft has to be disposed of as a defective product.

JP 2005-247163(A) describes a method of manufacturing a linear motion shaft, in which a rack shaft having rack teeth on the outer-circumferential portion and a screw shaft having a thread groove on the outer-circumferential portion are joined to each other by friction welding. In the method described in JP 2005-247163(A), in a step of manufacturing the rack shaft, the rack teeth are formed by performing a process to the outer-circumferential portion of a portion in the axial direction of a shaft material that is finished with high precision, while the outer-circumferential portion of the remaining portion of the shaft material is left unprocessed so as to serve as a supporting portion. Also, in a step of manufacturing the screw shaft, the thread groove is formed by performing a process to the outer-circumferential portion of a portion in the axial direction of a shaft material that is finished with high precision, while the outer-circumferential portion of the remaining portion of the shaft material is left unprocessed so as to serve as a supporting portion. Then, in a state where the rack shaft and the screw shaft are centered with each other by chucking the supporting portion of the rack shaft and the supporting portion of the screw shaft, the rack shaft and the screw shaft are joined to each other by friction welding. As a result, coaxiality of the portion having the rack teeth and the portion having the thread groove of the linear motion shaft falls within an allowable range.

### Citation List

### Patent Literature

[Patent Literature 1] JP 2005-247163(A)

### SUMMARY OF INVENTION

### Technical Problem

The method described in JP 2005-247163(A) has room for improvement in the following points.

That is, in the step of manufacturing the screw shaft, when the thread groove is formed by performing a process to a portion in the axial direction of the shaft material, there is a possibility that the screw shaft is bent and deformed according to the process, thereby reducing coaxiality of the processed portion having the thread groove and the unprocessed portion having the supporting portion. As a result, with respect to the completed linear motion shaft, there is a possibility that coaxiality of the portion having the rack teeth and the portion having the thread groove is reduced within the allowable range.

An object of the present invention is to achieve a structure of a linear motion shaft and a manufacturing method thereof that are capable of enhancing coaxiality of a portion having a rack toothed portion and a portion having a ball screw portion.

### Solution to Problem

A linear motion shaft for electric power steering device that is an object of a manufacturing method of the present invention includes a rack shaft part having a rack toothed portion on the outer-circumferential portion, a screw shaft part having a ball screw portion on the outer-circumferential portion, and a joining part that joins the rack shaft part and the screw shaft part to each other. Specifically, the rack shaft part and the screw shaft part are joined to each other by friction welding.

A method of the present invention for manufacturing a linear motion shaft for electric power steering device includes a step of manufacturing the rack shaft part, a step of manufacturing the screw shaft part, and a step of joining the rack shaft part and the screw shaft part to each other by friction welding.

The step of manufacturing the rack shaft part includes a step of forming the rack toothed portion on a material for rack shaft part by a plastic process. The step of manufacturing the screw shaft part includes a step of forming the ball screw portion on a material for screw shaft part by a plastic process.

Particularly, in the method of the present invention for manufacturing a linear motion shaft for electric power steering device, the step of manufacturing the screw shaft part includes a step of forming a gripped portion for centering, with reference to the ball screw portion, on the outer-circumferential portion of an end portion in the axial direction on a side of the screw shaft part to be joined to the rack shaft part.

The step of joining the rack shaft part and the screw shaft part to each other by friction welding includes a step of abutting an end portion in the axial direction of the rack shaft part and the end portion in the axial direction of the screw shaft part to each other while the screw shaft part is rotated by rotating a first gripping tool for centering in a state where the gripped portion of the screw shaft part is gripped with the first gripping tool, and the rack shaft part is held without rotation in a state where the rack shaft part is gripped with a second gripping tool for centering.

In the step of forming the gripped portion, preferably the gripped portion is formed with reference to a male thread groove of the ball screw portion.

In the step of joining the rack shaft part and the screw shaft part to each other by friction welding, preferably a sleeve is externally fitted without looseness around a portion on an opposite side in the axial direction of the screw shaft part from a side to which the rack shaft part is to be joined.

The plastic process for forming the ball screw portion is preferably a roll forming process, more preferably a through-feed roll forming process.

It is possible that in the step of forming the ball screw portion by a plastic process, the ball screw portion is formed in a predetermined range in the axial direction of the outer-circumferential portion of the screw shaft part that includes the end portion in the axial direction on the side to be joined to the rack shaft part, and in the step of forming the gripped portion, the gripped portion is formed by performing a shaving process to the end portion in the axial direction on the side to be joined to the rack shaft part with reference to a portion of the ball screw portion that is shifted in the axial direction from the end portion in the axial direction on the side to be joined to the rack shaft part.

Alternatively, it is possible that in the step of forming the ball screw portion by a plastic process, a first intermediate material for screw shaft part is obtained by forming the ball screw portion by the roll forming process on the outer-circumferential portion of a material for screw shaft part having a dimension in the axial direction that is twice a dimension in the axial direction of the screw shaft part, and then two second intermediate materials for screw shaft part are obtained by cutting the first intermediate material for screw shaft part off at a center position in the axial direction thereof, and in the step of forming the gripped portion, an end portion in the axial direction on a far side from a cut portion of each of the second intermediate materials for screw shaft part is used as the end portion in the axial direction on the side to be joined to the rack shaft part.

Alternatively, it is possible that in the step of forming the ball screw portion by a plastic process, a first intermediate material for screw shaft part is obtained by forming the ball screw portion by the roll forming process on an outer-circumferential portion of a material for screw shaft part having a predetermined dimension in the axial direction that exceeds a dimension in the axial direction of the screw shaft part, and then a second intermediate material for screw shaft part is obtained by cutting the first intermediate material for screw shaft part off into a dimension in the axial direction of the screw shaft part, and in the step of forming the gripped portion, an end portion on one side in the axial direction of the second intermediate material for screw shaft part is used as the end portion in the axial direction on the side to be joined to the rack shaft part.

A electric power steering device which is an object of a manufacturing method of the present invention comprises:
a linear motion shaft including a rack shaft part having a rack toothed portion on an outer-circumferential portion thereof, a screw shaft part having a ball screw portion on an outer-circumferential portion thereof, and a joining part that joins the rack shaft part and the screw shaft part;
a pinion shaft having a pinion toothed portion that meshes with the rack toothed portion;
an electric motor; and
a ball nut that thread-engages with the ball screw portion via a plurality of balls, and is configured to be rotated by the electric motor.

A method of the present invention for manufacturing an electric power steering device includes a step of manufacturing the linear motion shaft. Particularly, in the method of the present invention for manufacturing an electric power steering device, the linear motion shaft is manufactured by the method of the present invention for manufacturing the linear motion shaft for electric power steering device. Note that with respect to methods of manufacturing other members than the linear motion shaft and steps of assembling the respective members, it is possible to employ known, arbitrary manufacturing steps.

A linear motion shaft for electric power steering device of the present invention includes a rack shaft part having a rack toothed portion on an outer-circumferential portion thereof, a screw shaft part having a ball screw portion on an outer-circumferential portion thereof, a joining part that joins the rack shaft part and the screw shaft part to each other, and a gripped portion for centering provided on an outer-circumferential portion of an end portion in an axial direction of the screw shaft part on a side of the joining part.

The screw shaft part may have the ball screw portion on a portion shifted in the axial direction from the gripped portion over an entire length in the axial direction thereof.

The ball screw portion may have an incomplete roll-formed portion on an end portion in the axial direction on a far side from the rack shaft part, and have a complete roll-formed portion on a remaining portion shifted in the axial direction from the incomplete roll-formed portion.

An electric power steering device of the present invention, comprises:
a linear motion shaft including a rack shaft part having a rack toothed portion on an outer-circumferential portion thereof, a screw shaft part having a ball screw portion on an outer-circumferential portion thereof, a joining part that joins the rack shaft part and the screw shaft part to each other, and a gripped portion for centering provided on an outer-circumferential portion of an end portion in an axial direction of the screw shaft part on a side of the joining part;
a pinion shaft having a pinion toothed portion that meshes with the rack toothed portion;
an electric motor; and
a ball nut that thread-engages with the ball screw portion via a plurality of balls, and is configured to be rotated by the electric motor.

In the electric power steering device of the present invention, the ball screw portion may have an incomplete roll-formed portion on an end portion in the axial direction on a far side from the rack shaft part, and have a complete roll-formed portion on a remaining portion shifted in the axial direction from the incomplete roll-formed portion. In this case, only the complete roll-formed portion of the ball screw portion may engage with the plurality of balls.

### Effect of Invention

According to the present invention, in a linear motion shaft for electric power steering device, it is possible to enhance coaxiality of a portion having a rack toothed portion and a portion having a ball screw portion.

### BRIEF DESCRIPTION OF DRAWINGS

FIG. 1 is a schematic view of an electric power steering device of a first example of an embodiment of the present invention.
FIG. 2 is a partial perspective view illustrating a steering gear unit and an electric power assist device of the electric power steering device of the first example.
FIG. 3(a) is a plan view of a linear motion shaft of the first example, and FIG. 3(b) is a view of the linear motion shaft as viewed from the lower side of FIG. 3(a).
FIG. 4(a) is an end view illustrating a material for rack shaft part for forming a rack shaft part of the linear motion shaft of the first example, and FIG. 4(b) is a side view of the material for rack shaft part as viewed from the right side of FIG. 4(a).
FIG. 5(a) to FIG. 5(d) are cross-sectional views illustrating a work of forming a rack toothed portion of the rack shaft part of the first example in order of the steps.
FIG. 6(a) is a plan view of the rack shaft part of the first example, and FIG. 6(b) is a view of the rack shaft part of FIG. 6(a) as viewed from the lower side.
FIG. 7(a) is an end view illustrating a material for screw shaft part for forming a screw shaft part of the linear motion shaft of the first example, and FIG. 7(b) is a side view of the material for screw shaft part as viewed from the right side of FIG. 7(a).
FIG. 8(a) is a plan view of an intermediate material for screw shaft part for forming the screw shaft part of the first example, FIG. 8(b) is a plan view of the screw shaft part of the first example, and FIG. 8(c) is an enlarged view of section A of FIG. 8(b).
FIG. 9 is a cross-sectional view of a joining part (friction welded portion) that joins the rack shaft part and the screw shaft part of the first example to each other.
FIG. 10(a) is a plan view of a first intermediate material for screw shaft part for forming a screw shaft part of a linear motion shaft of a third example of an embodiment of the present invention, FIG. 10(b) is a plan view of a second intermediate material for screw shaft part for forming the screw shaft part of the third example, and FIG. 10(c) is a plan view with a partial cross-sectional view of the screw shaft part of the third example.
FIG. 11(a) is a plan view of a first intermediate material for screw shaft part for forming a screw shaft part of a linear motion shaft of a fourth example of an embodiment of the present invention, FIG. 11(b) is a plan view of a second intermediate material for screw shaft part for forming the screw shaft part of the fourth example, and FIG. 11(c) is a plan view of the screw shaft part of the fourth example.
FIG. 12(a) to FIG. 12(c) are cross-sectional views illustrating three other examples of a joining part that joins a rack shaft part and a screw shaft part to each other.

### DESCRIPTION OF EMBODIMENTS

### [First example]

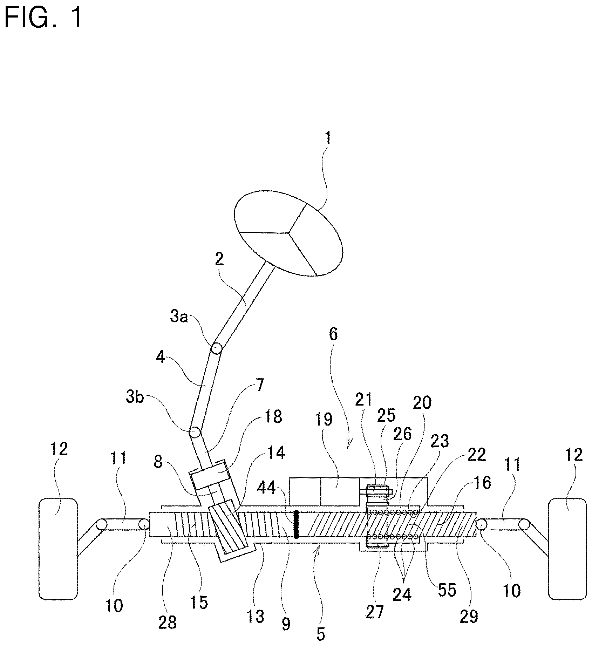

A first example of an embodiment of the present invention is described using FIG. 1 to FIG. 9. Note that a front-rear direction means a front-rear direction of a vehicle in the following description.

### (Electric power steering device and its manufacturing method)

An electric power steering device of this example has a function to give steering angles to left and right steered wheels 12 by pushing or pulling tie rods according to the operation amount of a steering wheel 1 by a driver, and a function to reduce a force required for the driver to operate the steering wheel 1. The electric power steering device of this example at least includes a linear motion shaft 9, a pinion shaft 8, an electric motor 19, and a ball nut 23. The linear motion shaft 9 includes a rack shaft part 28 having a rack toothed portion 15 on the outer-circumferential portion, a screw shaft part 29 having a ball screw portion 16 on the outer-circumferential portion, and a friction welded portion 44 which is a joining part joining the rack shaft part 28 and the screw shaft part 29 to each other by friction welding. The pinion shaft 8 has a pinion toothed portion 14 that meshes with the rack toothed portion 15. The pinion shaft 8 rotates according to rotation of the steering wheel 1. The ball nut 23 thread-engages with the ball screw portion 16 via a plurality of balls 24, and is rotated by the electric motor 19.

In a steering device in which the electric power steering device of this example is assembled, when the steering wheel 1 is rotated by a driver, the rotation of the steering wheel 1 is transmitted to an input shaft 7 of a steering gear unit 5 via a steering shaft 2, a universal joint 3a arranged on the rear side, an intermediate shaft 4, and a universal joint 3b arranged on the front side. In other words, the steering wheel 1 is supported by and fixed to the end portion on the rear side of the steering shaft 2, which is supported by the vehicle body so as to be able to rotate. The end portion on the front side of the steering shaft 2 is connected to the input shaft 7 of the steering gear unit 5 via the universal joint 3a arranged on the rear side, the intermediate shaft 4, and the universal joint 3b arranged on the front side.

The rack and pinion steering gear unit 5 of the steering device includes a housing 13 fixed to the vehicle body, the input shaft 7, a torsion bar (not illustrated), the pinion shaft 8, the linear motion shaft 9, and a pressing mechanism (not illustrated).

In the steering gear unit 5, the rotation of the input shaft 7 is transmitted to the pinion shaft 8 of the electric power steering device of this example via the torsion bar (not illustrated), and the rotating movement of the pinion shaft 8 is converted to linear motion in the axial direction of the linear motion shaft 9 of the electric power steering device of this example at a meshing part of the pinion toothed portion 14 and the rack toothed portion 15. When the linear motion shaft 9 linearly moves in the axial direction, the tie rods, which are respectively connected to the end portions on both sides in the axial direction of the linear motion shaft 9 via ball joints 10, are pushed and pulled, so that steering angles are given to the left and right steered wheels 12 corresponding to the operation amount of the steering wheel 1.

The pinion shaft 8 has the pinion toothed portion 14 at the tip-end portion. The pinion shaft 8 is arranged at the tip-end portion of the input shaft 7 so as to be coaxial to the input shaft 7, and is connected to the input shaft 7 via the torsion bar so that torque transmission is possible. The pinion shaft 8 is supported inside the housing 13 by a rolling bearing (not illustrated) so as only to be able to rotate.

The linear motion shaft 9 includes the rack shaft part 28 arranged in a portion on one side in the axial direction (left side portion in FIG. 1 to FIG. 3(b)) which has the rack toothed portion 15 on the outer-circumferential portion, the screw shaft part 29 arranged in a portion on the other side in the axial direction (right side portion in FIG. 1 to FIG. 3(b)) which has the ball screw portion 16 on the outer-circumferential portion, and the friction welded portion 44 which is a joining part that joins the rack shaft part 28 and the screw shaft part 29 to each other. In other words, the linear motion shaft 9 is formed by manufacturing the rack shaft part 28 and the screw shaft part 29 separately, and joining the end portion on the other side in the axial direction of the rack shaft part 28 and the end portion on the one side in the axial direction of the screw shaft part 29 to each other by friction welding.

The ball screw portion 16 is formed spirally in a range extending from the intermediate portion in the axial direction to the end portion on the other side in the axial direction of the linear motion shaft 9, and includes a male thread groove 55 having a substantially semicircular cross-sectional shape.

Both the rack toothed portion 15 and the ball screw portion 16 are formed by a plastic process. Specifically, the rack toothed portion 15 is formed by a forging process. The ball screw portion 16 is formed by a roll forming process.

In this example, both the rack shaft part 28 and the screw shaft part 29 are respectively composed of a solid shaft portion. However, when embodying the present invention, either one or both of the rack shaft part 28 and the screw shaft part 29 may be composed of a hollow shaft portion.

With the ball screw portion 16 thread-engaging with the plurality of balls 24 of a ball screw mechanism 20, the linear motion shaft 9 is supported by the housing 13 so as to be able to linearly moves in the axial direction. The rack toothed portion 15 of the linear motion shaft 9 meshes with the pinion toothed portion 14 of the pinion shaft 8. Due to this, the rotating movement of the pinion shaft 8 is converted to linear motion of the linear motion shaft 9. The linear motion shaft 9 is prevented from rotating with respect to the housing 13 by the meshing of the rack toothed portion 15 and the pinion toothed portion 14.

The steering gear unit 5 of this example has a variable gear ratio (VGR) structure where a specific stroke (movement amount in the axial direction of the linear motion shaft 9 / rotation angle of the pinion shaft 8), which corresponds to a movement amount in the axial direction of the linear motion shaft 9 per a rotation angle of the pinion shaft 8, varies according to the rotation angle of the pinion shaft 8. Specifically, in the steering gear unit 5, the specific stroke is set to a certain low value in the vicinity of the center region of the stroke, in other word, in the vicinity of a neutral rotation position which is a rotation position of the steering wheel 1 in a state where an automobile is running straightly, and the specific stroke is set to a certain high value in the vicinity of the end regions on both sides of the stroke, in other word, in the vicinity of rotation positions of the steering wheel 1 in a state where the steering wheel 1 has been steered respectively to the steering limits (socalled end-abutting state). The specific stroke varies continuously or stepwise in regions between the vicinity of the center region of the stroke and the vicinity of the end regions on both sides of the stroke. Due to this, the specifications of the rack toothed portion 15 such as a tooth pitch, a tooth shape, an inclination angle of a tooth trace and the like is changed according to the position in the axial direction.

In the electric power steering device of this example, because the steering gear unit 5 has the VGR structure, a turning angle of the steered wheels 12 with respect to an operation amount of the steering wheel 1 is small in the vicinity of the center region of the stroke, so that a running stability at the time of straight running is enhanced.

The pressing mechanism is housed in a portion of the inside of the housing 13 on the opposite side in the radial direction to the pinion shaft 8 across the linear motion shaft 9, so that the linear motion shaft 9 is pressed against the pinion shaft 8 due to an elastic force of a spring or the like. Due to this, a meshing state of the pinion toothed portion 14 and the rack toothed portion 15 is maintained properly, thereby suppressing occurrence of abnormal noises in the meshing part of the pinion toothed portion 14 and the rack toothed portion 15, and enhancing an operation feeling of the steering wheel 1.

The steering device of this example includes the electric power assist device 6. The electric power assist device 6 is arranged inside the housing 13, and includes a torque sensor 18, the electric motor 19, the ball screw mechanism 20, and a control part (not illustrated). The electric power assist device 6 supplies an auxiliary power of the electric motor 19 of the electric power steering device of this example to the linear motion shaft 9, thereby making it possible to reduce a force required for a driver to operate the steering wheel 1. When rotating the steering wheel 1, a direction and magnitude of a torque transmitted from the steering wheel 1 to the input shaft 7 are detected by the torque sensor 18, and then transmitted to the control part (not illustrated). The control part controls an amount of electricity-carrying to the electric motor 19 according to the direction and magnitude of a torque detected by the torque sensor 18, a vehicle speed and the like, so as to rotationally drive an output shaft 21 of the electric motor 19. The rotation of the output shaft 21 is transmitted to the ball nut 23 of the electric power steering device of this example via a driving pulley 25, an endless belt 26, and a driven pulley 27. The rotating movement of the ball nut 23 is converted to linear motion in the axial direction of the linear motion shaft 9 by the ball screw mechanism 20.

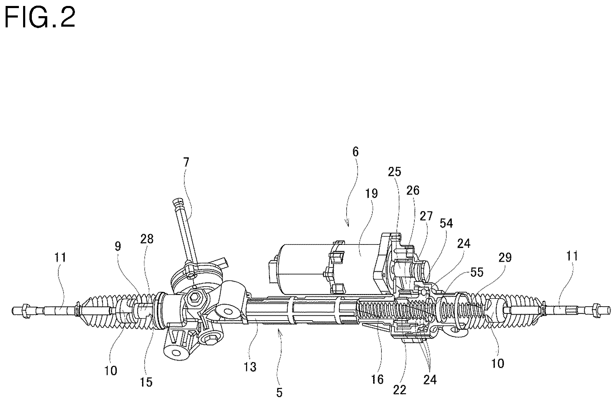

The ball screw mechanism 20 is composed of a female thread groove 22 having a spiral shape which is provided on the inner-circumferential surface of the ball nut 23, the male thread groove 55 of the ball screw portion 16, and the plurality of balls 24 which are rotatably arranged between the female thread groove 22 and the male thread groove 55. The ball nut 23 thread-engages with the ball screw portion 16 via the plurality of balls 24. The ball nut 23 is supported to the housing 13 by a rolling bearing 54 (see FIG. 2) or the like so as only to be able to freely rotate.

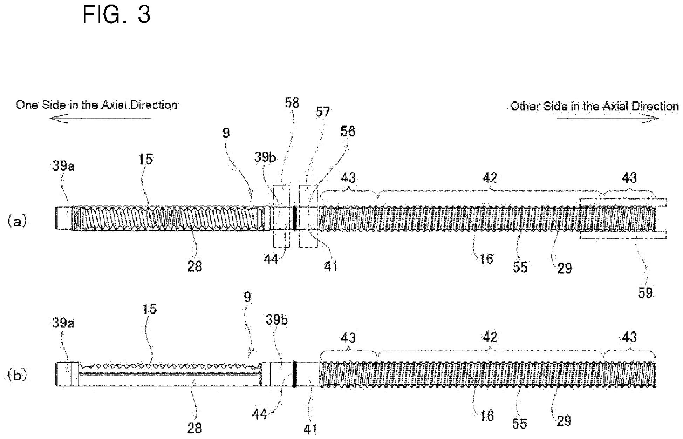

In the linear motion shaft 9 of this example, as illustrated in FIG. 3(a) and FIG. 3(b), the ball screw portion 16 has a complete roll-formed portion 42 in the intermediate portion in the axial direction, and has incomplete roll-formed portions 43 in the end portions on both sides in the axial direction. The complete roll-formed portion 42 is a portion where accuracy of a lead groove shape and the like is stable, and thread peaks have a predetermined height. The incomplete roll-formed portions 43 are portions where accuracy of a lead groove shape and the like is unstable, and thread peaks have an insufficient height compared to the complete roll-formed portion 42. In this example, only the complete roll-formed portion 42 of the ball screw portion 16 is used as an engagement portion with the plurality of balls 24. In other words, in this example, an operation range in the axial direction of the ball screw mechanism 20 is regulated such that the plurality of balls 24 engage only with the complete roll-formed portion 42, and the plurality of balls 24 do not engage with the incomplete roll-formed portions 43.

With the control part controlling an amount of electricity-carrying to the electric motor 19 according to the direction and magnitude of a torque detected by the torque sensor 18, and a vehicle speed signal, the electric power assist device 6 rotationally drives the output shaft 21 of the electric motor 19. The rotating movement of the output shaft 21 is transmitted to the ball nut 23 via the driving pulley 25, the endless belt 26 and the driven pulley 27, and the rotating movement of the ball nut 23 is converted to linear motion in the axial direction of the linear motion shaft 9 via the plurality of balls 24. Due to this, the linear motion shaft 9 is linearly moved with a larger force than an operating force of the steering wheel 1 by a driver. As a result, a force required for a driver to operate the steering wheel 1 is reduced.

A method of this example for manufacturing the electric power steering device includes a step of respectively manufacturing the linear motion shaft 9, the pinion shaft 8, the electric motor 19, and the ball nut 23, which are constituent members of the electric power steering device of this example, and a step of assembling these members to constitute the electric power steering device. Particularly, the method of this example for manufacturing the electric power steering device includes a manufacturing method of the linear motion shaft 9, and is characterized by the manufacturing method of the linear motion shaft 9.

### (Linear motion shaft and its manufacturing method)

The linear motion shaft 9 for electric power steering device, which constitutes the electric power steering device of this example, and its manufacturing method are described with reference to FIG. 3(a) to FIG. 8(c).

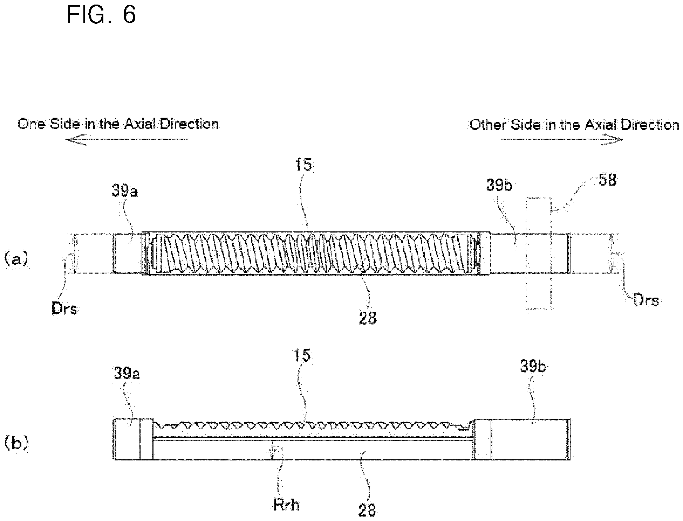

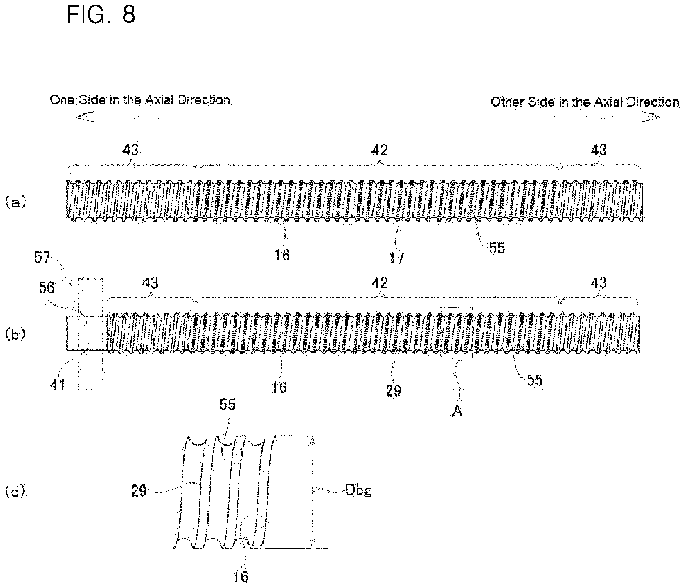

The method of this example for manufacturing the linear motion shaft 9 includes a step of manufacturing the rack shaft part 28, which is illustrated in FIG. 6(a) and FIG. 6(b), a step of manufacturing the screw shaft part 29, which is illustrated in FIG. 8(b) and FIG. 8(c), and a step of joining the rack shaft part 28 and the screw shaft part 29 to each other by friction welding.

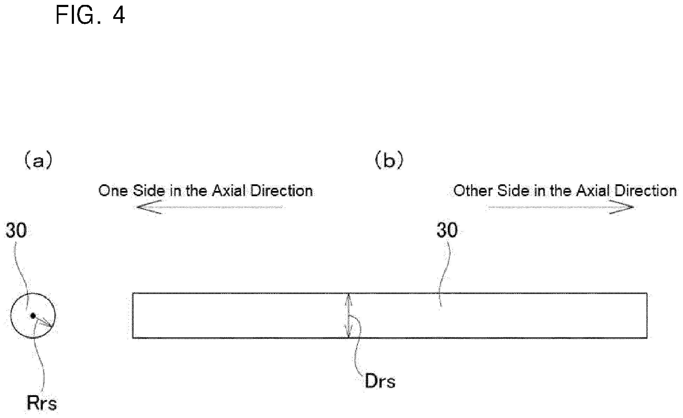

In the step of manufacturing the rack shaft part 28, a material 30 for rack shaft part as illustrated in FIG. 4(a) and FIG. 4(b) is prepared. In this example, the material 30 for rack shaft part is made of metal, and is a solid round bar having a columnar shape. As a metal of which the material 30 for rack shaft part is made, for example, various types of steel including carbon steel for machine structural use such as S48C, S53C and the like, alloy steel and the like may be employed. The rack shaft part 28 is manufactured by forming the rack toothed portion 15 on a portion in the circumferential direction of the outer-circumferential portion of the intermediate portion in the axial direction of the material 30 for rack shaft part by a cold forging process, which is a plastic process.

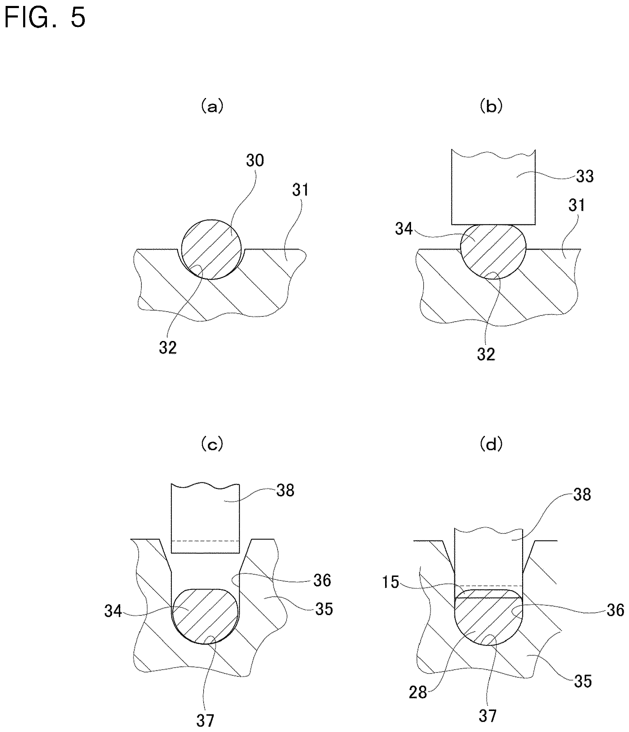

Specifically, as illustrated in FIG. 5(a), the material 30 for rack shaft part is set in a concave groove portion 32 having a circular arc cross-sectional shape, which is formed on the upper surface of a receiving die 31. Next, as illustrated in FIG. 5(b), an upsetting process is performed in which the material 30 for rack shaft part is strongly pressed in a direction toward the bottom surface of the concave groove portion 32 by the tip-end surface of the pressing punch 33 extending along a formation direction (front-back direction in FIG. 5(b)) of the concave groove portion 32. In this upsetting process, a portion of the intermediate portion in the axial direction of the material 30 for rack shaft part on which the rack toothed portion 15 is to be formed is squashed with the width dimension increased, thereby obtaining an intermediate material 34 for rack shaft part.

Next, as illustrated in FIG. 5(c), the intermediate material 34 for rack shaft part is set in a bottom portion 37 of a holding hole 36 having a U-shaped cross-sectional shape, which is provided in a die 35. Next, as illustrated in FIG. 5(c) to FIG. 5(d), the intermediate material 34 for rack shaft part is strongly pushed toward the bottom portion 37 by a teeth-forming punch 38 inserted into the holding hole 36. A processing surface which is the tip-end surface of the teeth-forming punch 38 has a complementary shape to the target rack toothed portion 15, in other word, a shape obtained by inverting the projections and depressions of the shape of the target rack toothed portion 15. Due to this, by strongly pushing the intermediate material 34 for rack shaft part toward the bottom portion 37 by the teeth-forming punch 38, a processed surface of the intermediate portion in the axial direction of the intermediate material 34 for rack shaft part, which is pressed by the processing surface of the teeth-forming punch 38, is plastically deformed along the processing surface, and thus the intermediate material 34 for rack shaft part is processed into the rack shaft part 28 having the rack toothed portion 15 as illustrated in FIG. 5(d). As needed, in order to improve shape accuracy and dimensional accuracy of the rack shaft part 28, a sizing process may be performed after the step in FIG. 5(d).

By performing appropriate heat treatment such as high-frequency heating to at least the rack toothed portion 15 of the rack shaft part 28, mechanical properties such as hardness of the rack toothed portion 15 is enhanced.

In the outer-circumferential surface of the obtained rack shaft part 28, a radius of curvature Rrh of a rear surface portion of the rack toothed portion 15 is made larger than a radius of curvature Rrs (= 1/2 of the outer-diameter dimension Drs of the material 30 for rack shaft part) of the outer-circumferential surface of the material 30 for rack shaft part (Rrh > Rrs) due to plastic deformation according to formation of the rack toothed portion 15. On the other hand, in the end portions on both sides in the axial direction of the rack shaft part 28, the end portions on both sides in the axial direction of the material 30 for rack shaft part remain unprocessed. In other words, the rack shaft part 28 includes small-diameter shaft portions 39a, 39b in the end portions on both sides in the axial direction, which respectively have a cylindrical outer-circumferential surface having an outer-diameter dimension Drs which is equal to that of the material 30 for rack shaft part.

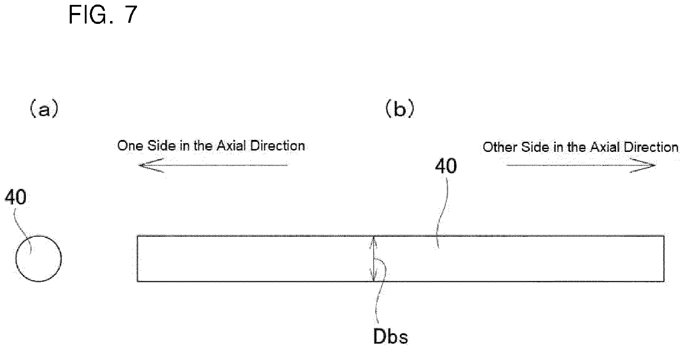

In the step of manufacturing the screw shaft part 29, a material 40 for screw shaft part as illustrated in FIG. 7(a) and FIG. 7(b) is prepared. In this example, the material 40 for screw shaft part is made of metal, and is a solid round bar having a columnar shape. As a metal of which the material 40 for screw shaft part is made, for example, various types of steel including carbon steel for machine structural use such as S48C, S53C and the like, alloy steel and the like may be employed. The properties of the material 40 for screw shaft part may be the same as or different from those of the material 30 for rack shaft part of the rack shaft part 28. In this example, the outer-diameter dimension Dbs of the material 40 for screw shaft part is the same as the outer-diameter dimension Drs of the material 30 for rack shaft part (Dbs = Drs). However, when embodying the present invention, the outer-diameter dimension Dbs of the material 40 for screw shaft part may be different from the outer-diameter dimension Drs of the material 30 for rack shaft part (Dbs ^ Drs).

In this example, the ball screw portion 16 is formed on the outer-circumferential portion of the material 40 for screw shaft part by a cold roll forming process, which is a plastic process. Particularly, in this example, a through-feed roll forming process is employed as the cold roll forming process.

In the through-feed roll forming process, a pair of roll forming dies (round dies) of which center axes are mutually inclined are used. Then, while rotating the pair of roll forming dies in the same direction at the same speed with the interval between the pair of roll forming dies kept constant, the material 40 for screw shaft part is supplied in the axial direction between the pair of roll forming dies. Then, with a walking phenomenon occurring in which the material 40 for screw shaft part moves in the axial direction between the pair of roll forming dies, the outer-circumferential portion of the material 40 for screw shaft part is subjected to a roll forming process, thereby forming the ball screw portion 16 on the outer-circumferential portion of the material 40 for screw shaft part. Due to this, an intermediate material 17 for screw shaft part of which the ball screw portion 16 is formed on the outer-circumferential portion over the entire length in the axial direction as illustrated in FIG. 8(a) is obtained. In this example, the through-feed roll forming process is performed by supplying the material 40 for screw shaft part between the pair of roll forming dies with the other side in the axial direction of the material 40 for screw shaft part set as a head side, and generating the movement in the axial direction of the material 40 for screw shaft part between the pair of roll forming dies by a walking. Due to this, when performing the through-feed roll forming process, the ball screw portion 16 is gradually formed on the outer-circumferential portion of the material 40 for screw shaft part from the other side in the axial direction toward one side in the axial direction. When embodying the present invention, the material 40 for screw shaft part may be supplied between the pair of roll forming dies with the one side in the axial direction of the material 40 for screw shaft part set as a head side.

In this example, during the through-feed roll forming process, in the middle of passing the material 40 for screw shaft part in the axial direction through between the pair of roll forming dies, the pair of roll forming dies are released in directions away from each other with respect to the radial direction. In other words, at a point of time when the pair of roll forming dies are released in directions away from each other with respect to the radial direction, the through-feed roll forming process is finished. In the ball screw portion 16, a range in the axial direction corresponding to the end portion on the other side in the axial direction, which is first supplied between the pair of roll forming dies, and a range in the axial direction corresponding to the end portion on the one side in the axial direction, which is brought in contact with the pair of roll forming dies in the almost final stage, are formed into the incomplete roll-formed portion 43, and a remaining range in the axial direction corresponding to the intermediate portion in the axial direction is formed into the complete roll-formed portion 42. In this example, at a point of time when the ball screw portion 16 having a predetermined length dimension is formed, the pair of roll forming dies are released in directions away from each other with respect to the radial direction. Specifically, the predetermined length dimension is an entire length dimension of the intermediate material 17 for screw shaft part. In other words, in this example, the predetermined range in the axial direction of the outer-circumferential portion of the screw shaft part 29 where the ball screw portion 16 is formed, which includes the end portion in the axial direction on the side to be joined to the rack shaft part 28, corresponds to a whole range in the axial direction of the screw shaft part 29.

In this example, because the through-feed roll forming process is finished before the material 40 for screw shaft part has completely passed through between the pair of roll forming dies, it is possible to reduce a cycle time, and enhance a lifetime of the pair of roll forming dies.

In a case where the ball screw portion 16 is formed by a roll forming process, other types of roll forming processes such as an infeed roll forming process, a plate roll forming process and the like may be employed in place of the through-feed roll forming process.

By performing appropriate heat treatment such as high-frequency heating to at least the complete roll-formed portion 42 of the ball screw portion 16 of the intermediate material 17 for screw shaft part, mechanical properties such as hardness of the complete roll-formed portion 42 is enhanced.

In this example, next, with reference to a male thread groove 55 of the complete roll-formed portion 42 of the intermediate material 17 for screw shaft part, a shaving process including a turning process as a cutting process, a grinding process, a polishing process and the like is performed to the outer-circumferential portion of the end portion on the one side in the axial direction of the incomplete roll-formed portion 43, which is located on the one side in the axial direction of the intermediate material 17 for screw shaft part. Due to this, a gripped portion 56 for centering having a cylindrical surface coaxial to the male thread groove 55 of the complete roll-formed portion 42 is formed on the outer-circumferential portion of the end portion on the one side in the axial direction of the intermediate material 17 for screw shaft part. In other words, a small-diameter shaft portion 41 of which the outer-circumferential portion serves as the gripped portion 56 is formed on the end portion on the one side in the axial direction of the intermediate material 17 for screw shaft part. Due to this, the screw shaft part 29 as illustrated in FIG. 8(b) is obtained. In the screw shaft part 29 of this example, because the gripped portion 56 is formed with reference to the male thread groove 55, the gripped portion 56 is coaxial to the ball screw portion 16 without the axis of the gripped portion 56 being deviated from the axis of the ball screw portion 16.

The gripped portion 56 may be configured by a perfect cylindrical surface as illustrated, or may be configured by a cylindrical surface on which a groove bottom portion of the ball screw portion 16 remains. Although, in this example, the gripped portion 56 is obtained by shaving only the end portion on the one side in the axial direction of the incomplete roll-formed portion 43 located on the one side in the axial direction of the intermediate material 17 for screw shaft part, the gripped portion 56 may be obtained by shaving the entire range in the axial direction of the incomplete roll-formed portion 43.

Alternatively, the gripped portion 56 coaxial to the male thread groove 55 of the complete roll-formed portion 42 may be obtained by providing a non-roll-formed portion which is not subjected to a roll forming process in the end portion on the one side in the axial direction of the material 40 for screw shaft part by finishing the roll forming process in an early stage when the through-feed roll forming process is finished before the material 40 for screw shaft part has completely passed through between the pair of roll forming dies, shaving the outer-circumferential portion of the non-roll-formed portion with reference to the male thread groove 55 of the complete roll-formed portion 42, and then using the shaved portion as the gripped portion 56.

Note that in the step of forming the gripped portion 56, the gripped portion 56 may be formed by performing a shaving process to the outer-circumferential portion of the end portion on the one side in the axial direction of the incomplete roll-formed portion 43, which is located on the one side in the axial direction of the intermediate material 17 for screw shaft part, with reference to a thread peak of the complete roll-formed portion 42 which is deviated from the male thread groove 55. However, from an aspect of well securing shape accuracy of a portion used as the reference of a shaving process, preferably a shaving process is performed to the outer-circumferential portion of the end portion on the one side in the axial direction of the incomplete roll-formed portion 43 with reference to the male thread groove 55.

Furthermore, although departing from the technical scope of the present invention, as long as the ball screw portion 16 of the screw shaft part 29 is formed by a through-feed roll forming process, the gripped portion may be obtained by providing a non-roll-formed portion in the end portion on the one side in the axial direction of the material 40 for screw shaft part by finishing the roll forming process in an early stage when the through-feed roll forming process is finished before the material 40 for screw shaft part has completely passed through between the pair of roll forming dies, and using the outer-circumferential portion of the non-roll-formed portion as the gripped portion as it is.

In the screw shaft part 29 manufactured in this manner, the outer-diameter dimension (outer-diameter dimension Dbg of the complete roll-formed portion 42) of a range in the axial direction where the ball screw portion 16 is made larger than the outer-diameter dimension Dbs of the material 40 for screw shaft part (Dbg > Dbs) due to plastic deformation according to the roll forming process. On the other hand, the outer-diameter dimension of the small-diameter shaft portion 41 is almost the same as the outer-diameter dimension Dbs of the material 40 for screw shaft part (that is, a value that is the same as Dbs, or slightly smaller or larger than Dbs), in other words, is similar to Dbs.

Next, the step of joining the rack shaft part 28 and the screw shaft part 29 to each other by friction welding will be described. The friction welding is a method of relatively rotating two metal members in a state where the two metal members are abutted and pressurized to each other, and thus joining the two metal members to each other by using a frictional heat generated at the abutting portion.

When joining the rack shaft part 28 and the screw shaft part 29 to each other by friction welding, first, the rack shaft part 28 and the screw shaft part 29 are coaxially arranged by centering the rack shaft part 28 and the screw shaft part 29, and then the end surface of the end portion on the other side in the axial direction of the rack shaft part 28 and the end surface of the small-diameter shaft portion 41 which is the end portion on the one side in the axial direction of the screw shaft part 29 are abutted and pressurized to each other. In this state, by relatively rotating the rack shaft part 28 and the screw shaft part 29, a frictional heat is generated at the abutting portion. Due to this, the abutting portion is put under conditions of high temperature and high pressure, and then the relative rotation is stopped. As a result, the abutting portion is turned into the friction welded portion 44 as being cooled, thereby obtaining the linear motion shaft 9.

Particularly, in this example, when performing friction welding, the rack shaft part 28 and the screw shaft part 29 are centered by gripping the gripped portion 56 of the screw shaft part 29 by a first gripping tool 57 for centering (see FIG. 3(a) and FIG. 8(b)), and gripping the outer-circumferential surface of the small-diameter shaft portion 39b of the rack shaft part 28 by a second gripping tool 58 for centering (see FIG. 3(a) and FIG. 6(a)). In this state, with the screw shaft part 29 rotated by rotating the first gripping tool 57, and with the rack shaft part 28 held without rotation, the end portions in the axial direction on sides close to each other of the rack shaft part 28 and the screw shaft part 29, in other words, the end portion on the other side in the axial direction of the rack shaft part 28 and the end portion on the one side in the axial direction of the screw shaft part 29 are abutted to each other, so as to perform the friction welding.

As the first gripping tool 57 and the second gripping tool 58, various types of gripping tools such as a collet chuck, a hydraulic three-claw chuck and the like may be employed. With respect to the rack shaft part 28, a portion in the axial direction where the rack toothed portion 15 is located may be used as a gripped portion for centering to be gripped by the second gripping tool 58. Furthermore, although departing from the technical scope of the present invention, with respect to the screw shaft part 29, a portion in the axial direction where the complete roll-formed portion 42 is located may be used as a gripped portion for centering to be gripped by the first gripping tool 57.

When joining the rack shaft part 28 and the screw shaft part 29 to each other by friction welding, as illustrated by a two-dot chain line in FIG. 3(a), a sleeve 59 may be arranged around the portion on the other side in the axial direction of the screw shaft part 29. Specifically, with the sleeve 59 externally fitted on the portion on the other side in the axial direction of the screw shaft part 29 without looseness in the radial direction, the friction welding may be performed by rotating the screw shaft part 29 and abutting the end portion on the other side in the axial direction of the rack shaft part 28 and the end portion on the one side in the axial direction of the screw shaft part 29 to each other.

During the friction welding, by externally fitting the sleeve 59 on the portion on the other side in the axial direction of the screw shaft part 29 without looseness, whirling of the screw shaft part 29 can be prevented.

The sleeve 59 is preferably arranged around a portion of the screw shaft part 29 on the opposite side in the axial direction to the side to be joined to the rack shaft part 28, and more preferably arranged around a range in the axial direction of the screw shaft part 29 including one part of the complete roll-formed portion 42. Preferably the length in the axial direction of the sleeve 59 is 1/3 or less the length in the axial direction of the screw shaft part 29. Even when the length in the axial direction of the sleeve 59 is more than 1/3 the length in the axial direction of the screw shaft part 29, no further effects are expected, and work for externally fitting the sleeve 59 onto the screw shaft part 29 becomes troublesome. The lower limit of the length in the axial direction of the sleeve 59 is not particularly limited, but preferably as long as possible from an aspect of preventing whirling of the screw shaft part 29. In short, most preferably the length in the axial direction of the sleeve 59 is 1/3 the length in the axial direction of the screw shaft part 29.

In the method of this example for manufacturing the linear motion shaft 9, the linear motion shaft 9 is obtained by manufacturing the rack shaft part 28 having the rack toothed portion 15 and the screw shaft part 29 having the ball screw portion 16 as individual shaft portions, and then joining the end portions in the axial direction of the rack shaft part 28 and the screw shaft part 29 to each other by friction welding. Therefore, when some trouble occurs in a process of the rack toothed portion 15 in the manufacturing step of the rack shaft part 28, only the rack shaft part 28 needs to be disposed of, and when some trouble occurs in a process of the ball screw portion 16 in the manufacturing step of the screw shaft part 29, only the screw shaft part 29 needs to be disposed of. In other words, it is possible to avoid such an inconvenience that even when some trouble occurs only in a process of either the rack toothed portion 15 or the ball screw portion 16, the entire linear motion shaft 9 has to be disposed of.

In the method of this example for manufacturing the linear motion shaft 9, the rack toothed portion 15 is formed by a cold forging process. Due to this, it is possible to make a yield of the material better and make a processing time shorter compared to cases where the rack toothed portion 15 is formed by a shaving process such as a cutting process. Particularly, although, in this example, the rack toothed portion 15 has a VGR structure where the specifications such as a tooth pitch, a tooth shape, an inclination angle of a tooth trace and the like is changed according to the position in the axial direction, it is difficult to form the rack toothed portion 15 having the VGR structure with good accuracy in a short time by a shaving process. On the other hand, in this example, because the rack toothed portion 15 is formed by a cold forging process, it is possible to easily form the rack toothed portion 15 with good accuracy in a short time by providing the processing surface of the teeth-forming punch 38 (FIG. 5) with a complementary shape to the target rack toothed portion 15.

In the method of this example for manufacturing the linear motion shaft 9, the ball screw portion 16 is formed by a cold roll forming process, which is a plastic process. Due to this, it is possible to make a yield of the material better and make a processing time shorter compared to cases where the ball screw portion 16 is formed by a shaving process such as a cutting process. Particularly, in this example, because a through-feed roll forming process is employed as the cold roll forming process, it is possible to form the complete roll-formed portion 42 of the ball screw portion 16 in a wide range in the axial direction of the intermediate portion in the axial direction of the screw shaft part 29 in a short time. Then, it is possible to form the complete roll-formed portion 42 of the ball screw portion 16 in a wide range in the axial direction of the end portion on the other side in the axial direction of the completed linear motion shaft 9. Therefore, it is possible to make a range where the balls 24 of the ball screw mechanism 20 are able to engage with the linear motion shaft 9 wider in the axial direction. As a result, it is possible to enhance flexibility of the product design layout, more specifically, a degree of freedom in an installation position in the axial direction of the ball nut 23 and the like with respect to the housing 13.

When the ball screw portion 16 is formed by a through-feed roll forming process, the incomplete roll-formed portions 43 are formed in the end portions on both ends in the axial direction of the ball screw portion 16. Because of unstable accuracy of the lead groove shape and the like and an insufficient height of the thread peaks compared to the complete roll-formed portion 42, the incomplete roll-formed portions 43 is not able to be used as a rolling portion for the balls 24 of the ball screw mechanism 20. However, in this example, the small-diameter shaft portion 41 is formed by shaving the outer-circumferential portion of at least the end portion on the one side in the axial direction of the incomplete roll-formed portion 43 located on the one side in the axial direction of the intermediate material 17 for screw shaft part, and then the outer-circumferential portion of the small-diameter shaft portion 41 is effectively used as the gripped portion 56 for centering when performing friction welding. Thus, according to this example, it is possible to manufacture the screw shaft part 29 in a short time while sufficiently suppressing waste of the material.

In this example, as a method of joining the end portions in the axial direction of the rack shaft part 28 and the screw shaft part 29 to each other, friction welding is employed. The friction welding is able to make a time required for joining short, thereby enhancing manufacturing efficiency of the linear motion shaft 9, and is able to enhance joinability of different materials, thereby making it possible to enhance joinability of the rack shaft part 28 and the screw shaft part 29 even when the rack shaft part 28 and the screw shaft part 29 are made of different materials.

In this example, when performing friction welding, the gripped portion 56 of the screw shaft part 29 to be gripped by the first gripping tool 57 is located on the end portion on the one side in the axial direction of the screw shaft part 29, which is a side to be joined to the rack shaft part 28, and the outer-circumferential surface of the small-diameter shaft portion 39b of the rack shaft part 28 to be gripped by the second gripping tool 58 is located on the end portion on the other side in the axial direction of the rack shaft part 28, which is a side to be joined to the screw shaft part 29. Due to this, when performing friction welding, it is possible to sufficiently suppress whirling in the radial direction of the end portions on the sides close to each other of the rack shaft part 28 and the screw shaft part 29.

After the ball screw portion 16 is formed and heat-treated, the gripped portion 56 of the screw shaft part 29 to be gripped by the first gripping tool 57 is formed to be coaxial to the ball screw portion 16 by a shaving process with reference to the male thread groove 55 of the ball screw portion 16. Due to this, in the screw shaft part 29, it is possible to well secure coaxiality of the ball screw portion 16 and the gripped portion 56 to be gripped by the first gripping tool 57. Accordingly, it is possible to make centering accuracy of the ball screw portion 16 higher compared to a case where friction welding is performed by chucking an unprocessed supporting portion of a shaft material where any thread groove is not formed, as in the method described in JP 2005-247163(A). As a result, according to this example, it is possible to well secure coaxiality of a portion having the rack toothed portion 15 and a portion having the ball screw portion 16 with respect to the linear motion shaft 9. In other words, it is possible to enhance straightness of the linear motion shaft 9.

With respect to the rack shaft part 28, the rack toothed portion 15 is formed by performing a cold forging process to the intermediate portion in the axial direction of the material 30 for rack shaft part, and at the same time unprocessed end portions on both sides in the axial direction of the material 30 for rack shaft part are used as the small-diameter shaft portions 39a, 39b. In this case, when the rack shaft part 28 is formed by performing a cold forging process to the material 30 for rack shaft part, as illustrated in FIG. 5(a) to FIG. 5(d), the material 30 for rack shaft part or the intermediate material 34 for rack shaft part is subjected to a process in a state where a portion in the circumferential direction of the outer-circumferential surface of the material 30 for rack shaft part or the intermediate material 34 for rack shaft part is constrained in the receiving die 31 or the die 35.

When coaxiality of the processed portion and the unprocessed portion of the rack shaft part 28 is reduced according to formation of the rack toothed portion 15, the processed portion and/or the unprocessed portion is subjected to a bending process or a shaving process before joining the rack shaft part 28 and the screw shaft part 29 to each other by friction welding. Due to this, coaxiality of a portion having the rack toothed portion 15 and a portion shifted in the axial direction from the rack toothed portion 15 of the rack shaft part 28 is enhanced. In other words, straightness of the rack shaft part 28 is enhanced. In this way, by sufficiently securing straightness of the rack shaft part 28, and then joining the rack shaft part 28 and the screw shaft part 29 to each other by friction welding, coaxiality of a portion having the rack toothed portion 15 and a portion having the ball screw portion 16 with respect to the complete linear motion shaft 9 is well secured.

Note that when coaxiality of the processed portion and the unprocessed portion of the rack shaft part 28 is little reduced according to formation of the rack toothed portion 15, the rack shaft part 28 having the formed rack toothed portion 15 as it is may be joined to the screw shaft part 29 by friction welding.

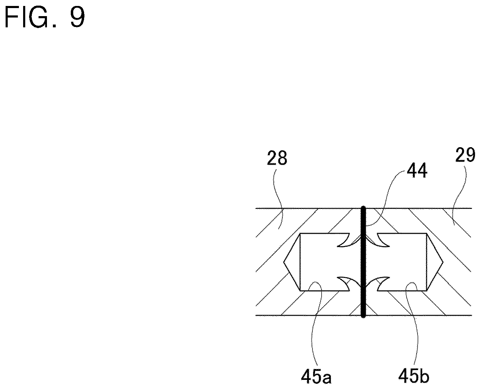

The linear motion shaft 9 of this example is configured by joining the end portion on the other side in the axial direction of the small-diameter shaft portion 39b having the same outer-diameter dimension as that of the material 30 for rack shaft part, and the end portion on the one side in the axial direction of the small-diameter shaft portion 41 having approximately the same outer-diameter dimension as that of the material 40 for screw shaft part to each other by friction welding. Due to this, for example, compared to a case where concave and convex fitting portions are subjected to friction welding, it is possible to reduce an area of portions to be subjected to friction welding, thereby making it possible to make an equipment smaller and make a cycle time shorter due to reduction of a pressurizing force when performing friction welding, resulting in cost reduction. Note that when embodying the present invention, in order to further reduce the area of portions to be subjected to friction welding, concave holes 45a, 45b with bottoms, which are open to end surfaces in the axial direction on the sides close to each other of the rack shaft part 28 and the screw shaft part 29 as illustrated in FIG. 9, may be formed in advance in the end portions in the axial direction on the sides close to each other of the rack shaft part 28 and the screw shaft part 29.

When embodying the method of the present invention for manufacturing a linear motion shaft, a plastic process (a forging process, a roll forming process and the like) for forming the rack toothed portion and the ball screw portion is not limited to be performed in the cold, and may be performed in the warm or in the hot. Even when a plastic process is performed in the warm or in the hot, an advantageous effect such that a yield of the material is made better and a processing time is made shorter can be obtained compared to a case where the rack toothed portion and the ball screw portion are formed by a shaving process.

### [Second example]

A second example of an embodiment of the present invention will be described with reference to FIG. 8(a) to FIG. 8(c). In this example, in a step of manufacturing the screw shaft part 29, a specific method of a through-feed roll forming process for forming the ball screw portion 16 is different from that of the first example. In this example, at a point of time when an entire material 40 for screw shaft part has completely passed through in the axial direction between the pair of roll forming dies, the through-feed roll forming process is finished. Due to this, in this example, in the ball screw portion 16, a range in the axial direction corresponding to the end portion on the other side in the axial direction which is first supplied between the pair of roll forming dies, and a range in the axial direction corresponding to the end portion on the one side in the axial direction which has finally passed through between the pair of roll forming dies are formed into the incomplete roll-formed portion 43 of the ball screw portion 16, and a remaining range in the axial direction corresponding to the intermediate portion in the axial direction is formed into the complete roll-formed portion 42 of the ball screw portion 16.

According to this example, the length in the axial direction of the incomplete roll-formed portion 43 located on the one side in the axial direction of the ball screw portion 16 formed by a through-feed roll forming process is able to be sufficiently made shorter than in the first example. In other words, the length in the axial direction of the complete roll-formed portion 42 of the ball screw portion 16 of the screw shaft part 29 is able to be made longer than in the first example. Therefore, it is possible to make a range where the balls 24 of the ball screw mechanism 20 are able to engage with the linear motion shaft 9 wider in the axial direction.

In this example, when the length in the axial direction of the incomplete roll-formed portion 43 located on the one side in the axial direction is shorter than the length in the axial direction required for the gripped portion 56 to be gripped by the first gripping tool 57, the length in the axial direction required for the gripped portion 56 may be secured by performing a shaving process not only to the incomplete roll-formed portion 43 located on the one side in the axial direction, but also to one part of the complete roll-formed portion 42 adjacent to the incomplete roll-formed portion 43. In this case, from the viewpoint of sufficiently securing the length in the axial direction of the complete roll-formed portion 42, desirably the length in the axial direction of a portion of the complete roll-formed portion 42 to be shaved is kept to the minimum necessary. Other configurations and effects are the same as in the first example.

### [Third example]

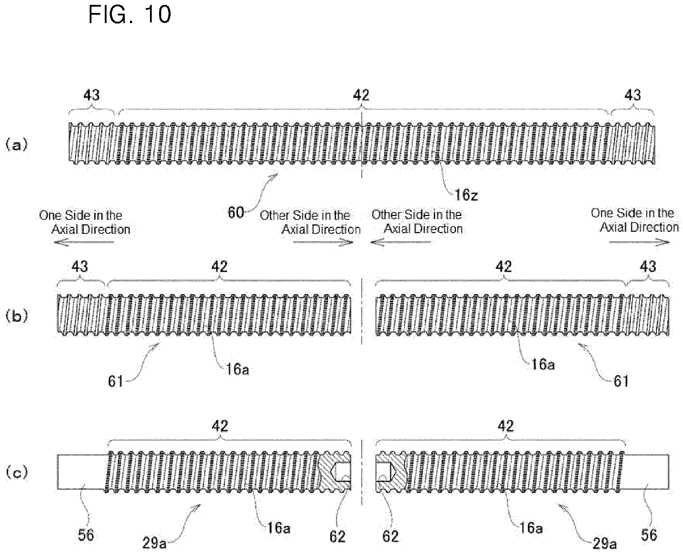

A third example of an embodiment of the present invention will be described with reference to FIG. 10(a) to FIG. 10(c). In this example, in a step of manufacturing a screw shaft part 29a, first, a ball screw portion 16z is formed by performing a through-feed roll forming process to the outer-circumferential portion of a columnar-shaped material for screw shaft part having a dimension in the axial direction twice as large as that of the target screw shaft part 29a. Due to this, a first intermediate material 60 for screw shaft part having the ball screw portion 16z on the outer-circumferential portion over the entire length in the axial direction as illustrated in FIG. 10(a) is obtained. The ball screw portion 16z has a complete roll-formed portion 42 in the intermediate portion in the axial direction, and has incomplete roll-formed portions 43 in the end portions on both sides in the axial direction.

Next, the first intermediate material 60 for screw shaft part is cut off at the center position in the axial direction to obtain two second intermediate materials 61 for screw shaft part respectively having a ball screw portion 16a in the outer-circumferential portion as illustrated in FIG. 10(b). The ball screw portion 16a of each of the second intermediate materials 61 for screw shaft part has an incomplete roll-formed portion 43 on the end portion on one side in the axial direction (left side of the second intermediate material 61 for screw shaft part located on a left side in FIG. 10(b), right side of the second intermediate material 61 for screw shaft part located on a right side in FIG. 10(b)), and has a complete roll-formed portion 42 in a remaining range in the axial direction over the entire length in the axial direction.

Then, by performing a shaving process to the outer-circumferential portion of the incomplete roll-formed portions 43 with reference to the male thread groove 55 of the complete roll-formed portion 42 of each of the second intermediate materials 61 for screw shaft part, the gripped portion 56 for centering, which is a cylindrical surface coaxial to the male thread groove 55 of the complete roll-formed portion 42, is formed. In other words, the small-diameter shaft portion 41, of which the outer-circumferential portion serves as the gripped portion 56 coaxial to the ball screw portion 16a, is formed on the end portion on the one side in the axial direction of each of the second intermediate materials 61 for screw shaft part. Furthermore, in each of the second intermediate materials 61 for screw shaft part, a screw hole 62 with a bottom is formed in an end portion on the other side in the axial direction (right side of the second intermediate material 61 for screw shaft part located on a left side in FIG. 10(b), left side of the second intermediate material 61 for screw shaft part located on a right side in FIG. 10(b)), which is opposite to the end portion the one side in the axial direction where the incomplete roll-formed portion 43 (small-diameter shaft portion 41) is provided. Due to this, the screw shaft part 29a as illustrated in FIG. 10(c) is obtained. The screw hole 62 is to be screwed with a male screw portion provided in the base-end portion of the tie rod 11.

The screw shaft part 29a is joined to the rack shaft part 28 (see FIG. 6(a) and FIG. 6(b)) by friction welding to obtain the linear motion shaft 9 (FIG. 1 to FIG. 3(b)). When performing friction welding, the gripped portion 56 of the screw shaft part 29a is gripped by the first gripping tool 57 for centering.

The screw shaft part 29a of this example has the complete roll-formed portion 42 on a portion of the outer-circumferential portion that extends from the intermediate portion in the axial direction to the end portion on the other side in the axial direction except the end portion on the one side in the axial direction where the gripped portion 56 is provided. Due to this, the screw shaft part 29a of this example easily secures a longer length in the axial direction of the complete roll-formed portion 42 than the screw shaft part 29 of the first example. In other words, this example easily secures a longer range in the axial direction where the balls 24 of the ball screw mechanism 20 are able to engage with the linear motion shaft 9 than the first example. Other configurations and effects are the same as in the first example.

### [Fourth example]

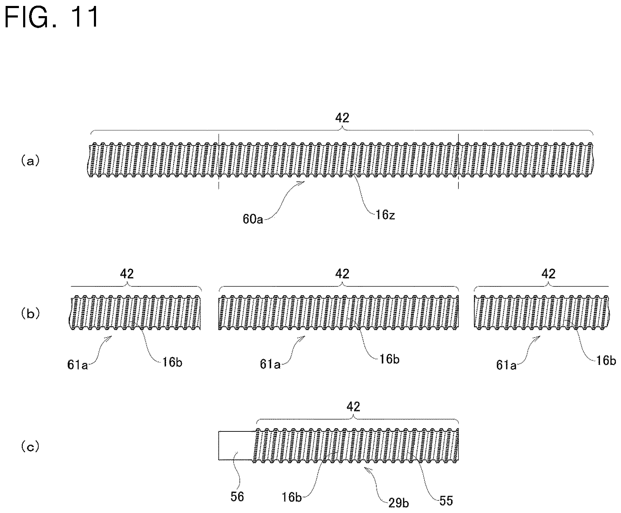

A fourth example of an embodiment of the present invention will be described with reference to FIG. 11(a) to FIG. 11(c). In this example, in a step of manufacturing a screw shaft part 29b, the ball screw portion 16z is formed by performing a through-feed roll forming process to the outer-circumferential portion of a long columnar-shaped material for screw shaft part having a predetermined dimension in the axial direction exceeding the dimension in the axial direction of the target screw shaft part 29b, specifically, a dimension in the axial direction that is several times or more, preferably three times or more, the dimension in the axial direction of the target screw shaft part 29b. Due to this, a long first intermediate material 60a for screw shaft part having the ball screw portion 16z on the outer-circumferential portion as illustrated in FIG. 11(a) is obtained. The upper limit of the predetermined dimension in the axial direction of the material for screw shaft part is arbitrary and determined according to the length of an available long material for screw shaft part.

Next, one part of the long first intermediate material 60a for screw shaft part is cut off into the dimension in the axial direction of the target screw shaft part 29, to obtain a second intermediate material 61a for screw shaft part having a ball screw portion 16b on the outer-circumferential portion over the entire length in the axial direction as illustrated in FIG. 11(b). Finally, a plurality of, preferably three or more, second intermediate materials 61a for screw shaft part are obtained from the one first intermediate material 60a for screw shaft part. The ball screw portion 16b of each of the second intermediate materials 61a for screw shaft part is composed of only the complete roll-formed portion 42. In other words, according to this example, the ball screw portion 16b can be provided with the complete roll-formed portion 42 over the entire length.

Furthermore, the gripped portion 56 for centering is formed on the end portion on one side in the axial direction of each of the second intermediate materials 61a for screw shaft part by a shaving process. In this example, the second intermediate materials 61a for screw shaft part respectively have the complete roll-formed portion 42 on the outer-circumferential portion over the entire length. Then, the gripped portion 56 is formed by shaving the end portion on the one side in the axial direction of each of the second intermediate materials 61a for screw shaft part by a minimum length required to be gripped by the first gripping tool 57. Due to this, the screw shaft part 29b as illustrated in FIG. 11(c) is obtained.

In the second intermediate material 61a for screw shaft part, which is obtained by performing a through-feed roll forming process to a long-shaft material for screw shaft part to obtain a long first intermediate material 60a for screw shaft part, and then cutting the first intermediate material 60a for screw shaft part off as in this example, the male thread groove 55 of the complete roll-formed portion 42 have good shape accuracy, but the outer-circumferential surface of the thread peaks of the complete roll-formed portion 42 do not necessarily have good shape accuracy. Therefore, in this example, the gripped portion 56 is formed by performing a shaving process to the end portion on the one side in the axial direction of the ball screw portion 16b, on which the gripped portion 56 for centering is to be formed, with reference to the male thread groove 55 of a portion of the ball screw portion 16b existing in an area in the axial direction shifted from the end portion on the one side in the axial direction on which the gripped portion 56 is to be formed.

The screw shaft part 29b is joined to the rack shaft part 28 (see FIG. 6(a) and FIG. 6(b)) by friction welding to obtain the linear motion shaft 9 (FIG. 1 to FIG. 3(b)). When performing friction welding, the gripped portion 56 of the screw shaft part 29b is gripped by the first gripping tool 57 for centering.

In this example, the gripped portion 56 is formed by shaving the end portion on the one side in the axial direction of the second intermediate material 61 a for screw shaft part having the complete roll-formed portion 42 on the outer-circumferential portion over the entire length by a minimum length required to be gripped by the first gripping tool 57, to obtain the screw shaft part 29b. Due to this, the screw shaft part 29b of this example easily secures a longer length in the axial direction of the complete roll-formed portion 42 than the screw shaft part 29a of the third example. In other words, this example easily secures a longer range in the axial direction where the balls 24 of the ball screw mechanism 20 are able to engage with the linear motion shaft 9 than the third example.

Because the screw shaft part 29b of this example has the complete roll-formed portion 42 up to the end portion on the other side in the axial direction, during friction welding, the sleeve 59 (see FIG. 3(a)) is easily arranged around a range in the axial direction including a portion of the complete roll-formed portion 42 of the screw shaft part 29b. Other configurations and effects are the same as in the first example and the second example.

### [Fifth example]

A fifth example of an embodiment of the present invention will be described with reference to FIG. 6(a) and FIG. 6(b). In this example, in a step of manufacturing the rack shaft part 28, after the rack toothed portion 15 is formed and heat-treated, the small-diameter shaft portion 39b serving as a gripped portion for centering is formed on the outer-circumferential portion of the end portion on the other side in the axial direction of the rack shaft part 28, which is the end portion to be joined to the screw shaft part 29 (see FIG. 1 to FIG. 3(b)), by a shaving process with reference to the rack toothed portion 15. Due to this, the small-diameter shaft portion 39b is finished so as to be coaxial to a portion on which the rack toothed portion 15 exists. Then, in the step of performing friction welding, the small-diameter shaft portion 39b is gripped by the second gripping tool 58.

According to this example, it is possible to better secure coaxiality of the rack toothed portion 15 and the small-diameter shaft portion 39b serving as a gripped portion to be gripped by the second gripping tool 58 of the rack shaft part 28 compared to the first example. As a result, according to this example, with respect to the linear motion shaft 9 (see FIG. 1 to FIG. 3(b)), it is possible to better secure coaxiality of a portion having the rack toothed portion 15 and a portion having the ball screw portion 16 of the linear motion shaft 9 compared to the first example. Other configurations and effects are the same as in the first example.

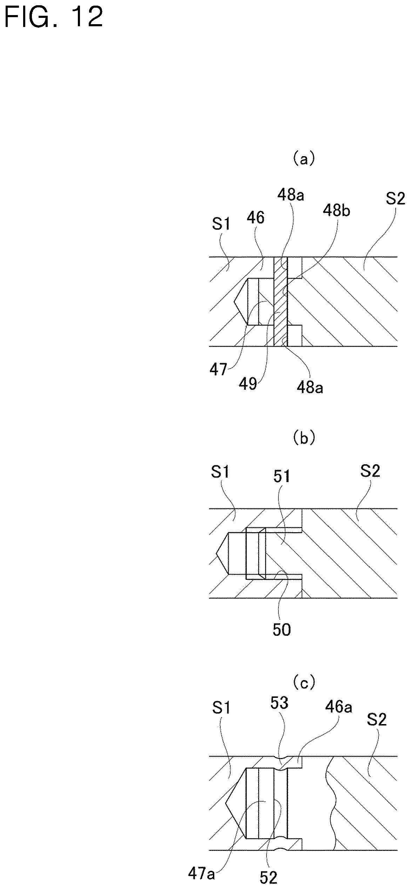

Although departing from the technical scope of the present invention, as a method of joining a rack shaft part and a screw shaft part to each other, for example, joining methods as illustrated in FIG. 12(a) to FIG. 12(c) may be employed.

In the joining method illustrated in FIG. 12(a), the inner-diameter side of a cylindrical portion 46 formed on the end portion of a shaft portion SI, which is one of the rack shaft part and the screw shaft part, is internally fitted without looseness, for example, internally press-fitted, with a small-diameter shaft portion 47 formed on the end portion of a shaft portion S2, which is the other of the rack shaft part and the screw shaft part. Then, a pin 49 is press-inserted to press-inserting holes 48a, 48b respectively formed so as to penetrate the cylindrical portion 46 and the small-diameter shaft portion 47 in the radial direction to join the rack shaft part and the screw shaft part to each other.

In the joining method illustrated in FIG. 12(b), a screw hole 50 formed on the end portion of a shaft portion S1, which is one of the rack shaft part and the screw shaft part, is screwed with a screw shaft portion 51 formed on the end portion of a shaft portion S2, which is the other of the rack shaft part and the screw shaft part, to join the rack shaft part and the screw shaft part to each other.

In the joining method illustrated in FIG. 12(c), to the inner-diameter side of a cylindrical portion 46a formed on the end portion of a shaft portion S1, which is one of the rack shaft part and the screw shaft part, a small-diameter shaft portion 47a formed on the end portion of a shaft portion S2, which is the other of the rack shaft part and the screw shaft part is internally fitted without looseness, for example, internally press-fitted. Then, a circumferential groove 52 formed in the circumferential direction on the outer-circumferential portion of the small-diameter shaft portion 47a engages with a crimping portion 53 formed in the cylindrical portion 46a to join the rack shaft part and the screw shaft part to each other.

### Reference Signs List

- 1: Steering wheel
- 2: Steering shaft
- 3a, 3b: Universal joint
- 4: Intermediate shaft
- 5: Steering gear unit
- 6: Electric power assist device
- 7: Input shaft
- 8: Pinion shaft
- 9: Linear motion shaft
- 10: Ball joint
- 11: Tie rod
- 12: Steered wheel
- 13: Housing
- 14: Pinion toothed portion
- 15: Rack toothed portion
- 16, 16a, 16b, 16z: Ball screw portion
- 17: Intermediate material for screw shaft part
- 18: Torque sensor
- 19: Electric motor
- 20: Ball screw mechanism
- 21: Output shaft
- 22: Female thread groove
- 23: Ball nut
- 24: Ball
- 25: Driving pulley
- 26: Endless belt
- 27: Driven pulley
- 28: Rack shaft part
- 29, 29a, 29b: Screw shaft part
- 30: Material for rack shaft part
- 31: Receiving die
- 32: Concave groove portion
- 33: Pressing punch
- 34: Intermediate material for rack shaft part
- 35: Die
- 36: Holding hole
- 37: Bottom portion
- 38: Teeth-forming punch
- 39a, 39b: Small-diameter shaft portion
- 40: Material for screw shaft part
- 41: Small-diameter shaft portion
- 42, 42z: Complete roll-formed portion
- 43: Incomplete roll-formed portion
- 44: Friction welded portion
- 45a, 45b: Concave hole
- 46, 46a: Cylindrical portion
- 47, 47a: Small-diameter shaft portion
- 48a, 48b: Press-inserting hole
- 49: Pin
- 50: Screw hole
- 51: Screw shaft portion
- 52: Circumferential groove
- 53: Crimping portion
- 54: Rolling bearing
- 55: Male thread groove
- 56: Gripped portion
- 57: First gripping tool
- 58: Second gripping tool
- 59: Sleeve
- 60, 60a: First intermediate material for screw shaft part
- 61, 61a: Second intermediate material for screw shaft part
- 62: Screw hole

## Claims

1. A method for manufacturing a linear motion shaft for electric power steering device,
the linear motion shaft including a rack shaft part having a rack toothed portion on an outer-circumferential portion thereof, a screw shaft part having a ball screw portion on an outer-circumferential portion thereof, and a joining part that joins the rack shaft part and the screw shaft part to each other,
the method comprising:
a step of manufacturing the rack shaft part;
a step of manufacturing the screw shaft part; and
a step of joining the rack shaft part and the screw shaft part to each other by friction welding;
the step of manufacturing the rack shaft part including a step of forming the rack toothed portion on a material for rack shaft part by a plastic process;
the step of manufacturing the screw shaft part including a step of forming the ball screw portion on a material for screw shaft part by a plastic process, and a step of forming a gripped portion for centering, with reference to the ball screw portion, on an outer-circumferential portion of an end portion in an axial direction on a side of the screw shaft part to be joined to the rack shaft part; and
the step of joining the rack shaft part and the screw shaft part to each other by friction welding including a step of abutting an end portion in the axial direction of the rack shaft part and the end portion in the axial direction of the screw shaft part to each other while the screw shaft part is rotated by rotating a first gripping tool for centering in a state where the gripped portion of the screw shaft part is gripped with the first gripping tool, and the rack shaft part is held without rotation in a state where the rack shaft part is gripped with a second gripping tool for centering.

2. The method for manufacturing the linear motion shaft for electric power steering device according to claim 1, wherein
in the step of forming the gripped portion, the gripped portion is formed with reference to a male thread groove of the ball screw portion.

3. The method for manufacturing the linear motion shaft for electric power steering device according to claim 1 or 2, wherein
in the step of joining the rack shaft part and the screw shaft part to each other by friction welding, a sleeve is externally fitted without looseness around a portion on an opposite side in the axial direction of the screw shaft part from a side to which the rack shaft part is to be joined.

4. The method for manufacturing the linear motion shaft for electric power steering device according to any one of claims 1 to 3, wherein
the plastic process for forming the ball screw portion is a roll forming process.

5. The method for manufacturing the linear motion shaft for electric power steering device according to claim 4, wherein
the roll forming process is a through-feed roll forming process.

6. The method for manufacturing the linear motion shaft for electric power steering device according to claim 4 or 5, wherein
in the step of forming the ball screw portion by a plastic process, the ball screw portion is formed in a predetermined range in the axial direction of the outer-circumferential portion of the screw shaft part that includes the end portion in the axial direction on the side to be joined to the rack shaft part, and
in the step of forming the gripped portion, the gripped portion is formed by performing a shaving process to the end portion in the axial direction on the side to be joined to the rack shaft part with reference to a portion of the ball screw portion that is shifted in the axial direction from the end portion in the axial direction on the side to be joined to the rack shaft part.

7. The method for manufacturing the linear motion shaft for electric power steering device according to claim 4 or 5, wherein
in the step of forming the ball screw portion by a plastic process, a first intermediate material for screw shaft part is obtained by forming the ball screw portion by the roll forming process on an outer-circumferential portion of a material for screw shaft part having a dimension in the axial direction that is twice a dimension in the axial direction of the screw shaft part, and then two second intermediate materials for screw shaft part are obtained by cutting the first intermediate material for screw shaft part off at a center position in the axial direction thereof, and
in the step of forming the gripped portion, an end portion in the axial direction on a far side from a cut portion of each of the second intermediate materials for screw shaft part is used as the end portion in the axial direction on the side to be joined to the rack shaft part.

8. The method for manufacturing the linear motion shaft for electric power steering device according to claim 4 or 5, wherein
in the step of forming the ball screw portion by a plastic process, a first intermediate material for screw shaft part is obtained by forming the ball screw portion by the roll forming process on an outer-circumferential portion of a material for screw shaft part having a predetermined dimension in the axial direction that exceeds a dimension in the axial direction of the screw shaft part, and then a second intermediate material for screw shaft part is obtained by cutting the first intermediate material for screw shaft part off into a dimension in the axial direction of the screw shaft part, and
in the step of forming the gripped portion, an end portion on one side in the axial direction of the second intermediate material for screw shaft part is used as the end portion in the axial direction on the side to be joined to the rack shaft part.

9. A method for manufacturing an electric power steering device,
the electric power steering device including:
a linear motion shaft including a rack shaft part having a rack toothed portion on an outer-circumferential portion thereof, a screw shaft part having a ball screw portion on an outer-circumferential portion thereof, and a joining part that joins the rack shaft part and the screw shaft part to each other;
a pinion shaft having a pinion toothed portion that meshes with the rack toothed portion;
an electric motor; and
a ball nut that thread-engages with the ball screw portion via a plurality of balls, and is configured to be rotated by the electric motor;
the method comprising a step of manufacturing the linear motion shaft; and
in the step, the linear motion shaft being manufactured by the method for manufacturing the linear motion shaft for electric power steering device according to any one of claims 1 to 8.

10. A linear motion shaft for electric power steering device comprising:
a rack shaft part having a rack toothed portion on an outer-circumferential portion thereof;
a screw shaft part having a ball screw portion on an outer-circumferential portion thereof;
a joining part that joins the rack shaft part and the screw shaft part to each other; and
a gripped portion for centering provided on an outer-circumferential portion of an end portion in an axial direction of the screw shaft part on a side of the joining part.

11. The linear motion shaft for electric power steering device according to claim 10, wherein
the screw shaft part has the ball screw portion on a portion shifted in the axial direction from the gripped portion over an entire length in the axial direction thereof.

12. The linear motion shaft for electric power steering device according to claim 11, wherein
the ball screw portion has an incomplete roll-formed portion on an end portion in the axial direction on a far side from the rack shaft part, and has a complete roll-formed portion on a remaining portion shifted in the axial direction from the incomplete roll-formed portion.

13. An electric power steering device comprising:
a linear motion shaft including a rack shaft part having a rack toothed portion on an outer-circumferential portion thereof, a screw shaft part having a ball screw portion on an outer-circumferential portion thereof, a joining part that joins the rack shaft part and the screw shaft part to each other; and a gripped portion for centering provided on an outer-circumferential portion of an end portion in an axial direction of the screw shaft part on a side of the joining part;
a pinion shaft having a pinion toothed portion that meshes with the rack toothed portion;
an electric motor; and
a ball nut that thread-engages with the ball screw portion via a plurality of balls, and is configured to be rotated by the electric motor.

14. The electric power steering device according to claim 13, wherein
the ball screw portion has an incomplete roll-formed portion on an end portion in the axial direction on a far side from the rack shaft part, and has a complete roll-formed portion on a remaining portion shifted in the axial direction from the incomplete roll-formed portion, and only the complete roll-formed portion of the ball screw portion engages with the plurality of balls.
